# EUROPÄISCHE PATENTSCHRIFT

(11) **EP 1 110 860 B1**
(45) Veröffentlichungstag und Bekanntmachung des Hinweises auf die Patenterteilung: **14.04.2004**
(21) Anmeldenummer: 00126340.9
(22) Anmeldetag: 02.12.2000
(51) Int. Cl.: B64D 9/00, B64C 1/22

(54) **Frachtladesystem für ein Flugzeug**
Aircraft cargo loading system
Système de chargement de fret pour avion

(30) Priorität: 21.12.1999 DE 19961734
(43) Veröffentlichungstag der Anmeldung: 27.06.2001
(73) Patentinhaber: Airbus Deutschland GmbH, 21129 Hamburg (DE)
(72) Erfinder: Eilenstein, Wilfried, 28816 Stuhr (DE); Sempert, Hartmut, 27798 Hude (DE)
(74) Vertreter: Hansmann, Dierk, Dipl.-Ing.

(56) Entgegenhaltungen:
- DE-A- 3 940 184
- GB-A- 2 248 816
- US-A- 3 741 504
- US-A- 4 375 932

## Beschreibung

Die Erfindung betrifft ein Frachtladesystem für ein Flugzeug zum Be- und/oder Entladen von Beladungseinheiten, insbesondere von Containern, Paletten oder dergleichen, wobei Rollenantriebseinheiten zum Transport des Frachtgutes, Riegeleinheiten zum Verriegeln des Frachtgutes sowie Steuereinheiten zum Betätigen der Rollenantriebseinheiten und/oder der Riegeleinheiten vorgesehen sind.

In den Frachtladesystemen nach dem herkömmlichen Stand der Technik, wie beispielsweise in DE-PS 44 27 696 beschrieben, sind im Laderaum des Flugzeuges Rollenantriebseinheiten bekannt, die in einem bestimmten Abstand und innerhalb von Rollenbahnen angeordnet sind. Mit diesen Rollenantriebseinheiten, deren Kraftübertragung auf das zu bewegende Ladegut kraftschlüssig erfolgt, können die Frachtcontainer oder Paletten innerhalb des Laderaumes bewegt werden. Nachteilig hierbei ist, daß die elektrisch angetriebenen Antriebsrollen der Rollenantriebseinheiten einem hohen Verschleiß unterliegen. Aufgrund der wirkenden hohen Kräfte oder auch bei einem Blockieren eines Containers wird die entsprechende Antriebsrolle und der für jede Antriebsrolle vorgesehene Elektromotor häufig überlastet und kann Schäden davontragen. Folglich fallen oftmals die Rollenantriebseinheiten aus und müssen ausgetauscht werden, was einen hohen Wartungsaufwand bedeutet. Ein weiteres Problem ergibt sich aus der Anwendung von elektrischen Komponenten, wie die bereits genannten Elektromotoren jeder Rollenantriebseinheit oder auch elektrische Steuerungsvorrichtungen, die aufwendig gegenüber Feuchtigkeit und Schmutz geschützt und elektromagnetisch abgeschirmt werden müssen. Es tritt elektrochemische Korrrosion auf, die die Störanfälligkeit der Komponenten ebenfalls erhöht.

Aus US 3 741 504 A ist ein Frachtladesystem gemäß dem Oberbegriff des Anspruchs 1 bekannt, welches die Frachtbehälter mittels Antriebsräder an die entsprechende Position im Frachtraum transportiert. Angetriebene Luftreifen werden bei Bedienung durch eine Person an einem Bedienpanel elektrisch angesteuert, um einen weitgehend automatischen Transport der Frachtbehälter zu erreichen. Auch in dieser Lösung ist durch den Einsatz elektrischer Komponenten ein erhöhter Aufwand für eine elektromagnetische Abschirmung sowie ein Schutz gegen Feuchtigkeit und Schmutz notwendig.

Aufgrund der hohen Sicherheitsanforderungen an Bord eines Flugzeuges ist somit der Einsatz von elektrischen Komponenten im Fachtraum eines Flugzeuges mit einem hohen Handhabungs- und Kontrollaufwand verbunden und es besteht ein Gefährdungspotential, beispielsweise durch Funken- bzw. Feuerentstehung. Auch ist jede Rollenantriebseinheit mit einem Elektromotor ausgestattet und aufgrund der Vielzahl von Rollenantriebseinheiten je Frachtladesystem bedeutet dies eine hohes Gewicht.

Aus US 4 375 932 A ist eine Frachthaltekomponente bekannt, die eine Verriegelung der Fracht bzw. des Frachtbehälters in einem Flugzeugfrachtraum ermöglicht. Die Betätigung der Komponente erfolgt mittels eines Aktuators, wobei konventionelle Linearaktuatoren auf pneumatischer, hydraulischer oder elektrischer Basis zum Einsatz kommen können. Ein konkreter Hinweis auf mögliche Nachteile beim Einsatz von elektrischen Komponenten ist nicht erwähnt.

Der Erfindung liegt daher die Aufgabe zugrunde, ein Frachtladesystem der eingangs genannten Art zu schaffen, welches die im Stand der Technik vorhandenen Nachteile überwindet und in einfacher, robuster Weise ein Be- und Entladen eines Flugzeugfrachtraumes mit Beladeeinheiten ermöglicht.

Diese Aufgabe wird erfindungsgemäß bei einem gattungsgemäßen Frachtladesystem mit den im Patentanspruch 1 genannten Maßnahmen gelöst. Dabei ist insbesondere von Vorteil, daß Gefährdungen durch Funken- bzw. Feuerentstehung an elektrischen Geräten vermieden werden und mit dem Einsatz von pneumatischen Geräten ein robustes, kostengünstiges System realisiert ist. Bei Überlastungen und Zerstörungen von Leitungen kann es nicht zu einem Ausfall des gesamten Leitungsnetzes kommen. Das erfindungsgemäße Frachtladesystem ist feuchtigkeitsunempfindlich und wartungsfreundlich. Durch das Fehlen bzw. Minimieren von stromführenden Leitungen im Frachtraum kann eine elektrochemische Korrosion vermieden werden und es treten keine elektromagnetischen Unverträglichkeiten zu anderen Systemen auf. Durch den Wegfall von Elektromotoren je Rollenantriebseinheit ist auch ein leichteres Systemgewicht erreicht.

Weiterbildungen und vorteilhafte Ausgestaltungen sind in den Unteransprüchen 2 bis 10 angegeben.

In der Zeichnung sind Ausführungsbeispiele der Erfindung dargestellt, die nachstehend anhand der Figuren 1 bis 3 näher beschrieben werden. In den Figuren sind gleiche Bauteile mit gleichen Bezugszeichen versehen.

Es zeigt
- Fig. 1: ein Frachtladesystem für ein Flugzeug in einer ersten Ausführungsform in schematischer Darstellung,
- Fig. 2: ein Frachtladesystem für ein Flugzeug in einer zweiten Ausführungsform in schematischer Darstellung und
- Fig. 3: eine dritte Ausführungsform eines Frachtladesystems in schematischer Darstellung.

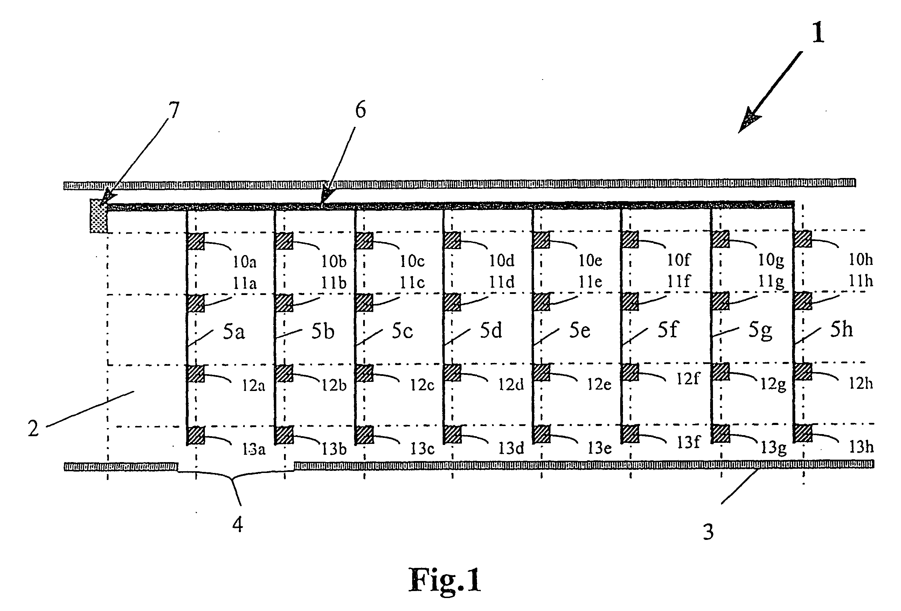

Die Fig. 1 zeigt in einer schematischen Darstellung eine erste Ausführungsform eines Frachtladesystem 1 in einer Draufsicht, d.h. es ist das Layout eines Frachtraumes 2 eines Flugzeuges erkennbar. Die Außenbegrenzungen des Frachtraumes 2 ergeben sich durch den Flugzeugrumpf 3 mit den entsprechenden Strukturteilen (nicht gezeigt), wobei eine Öffnung 4 im Flugzeugrumpf 3 vorgesehen sein muß. Die Öffnung 4 wird üblicherweise mit einem Frachtladetor (nicht gezeigt) geschlossen, wenn der Be- bzw. Entladevorgang von Beladungseinheiten, wie Containern, Paletten oder ähnliches, beendet ist. Das Frachtladesystem 1 besteht im wesentlichen aus einer Vielzahl von pneumatisch betriebenen Komponenten 10a-h, 11a-h, 12a-h und 13a-h, vorzugsweise Antriebseinheiten und Riegeleinheiten, die - wie bereits aus bisherigen Frachtladesystemen bekannt - am Fußboden des Frachtraumes 2 in der Weise angeordnet sind, daß Container oder anderes Frachtgut in den Frachtraum hinein- und auch wieder hinausbefördert und am entsprechenden Stellplatz verriegelt werden können. Am Fußboden des Frachtraumes 2 sind weiterhin Kugelmatten bzw. Rollenbahnen angeordnet, die in den Prinzipdarstellungen der Fign. 1 bis 3 nicht gezeigt sind. Die Kugelmatten bzw. Rollenbahnen können vorzugsweise nach dem bekannten Stand der Technik ausgebildet sein, so wie sie derzeit in üblichen Frachtladesystemen zur Anwendung kommen.

Die Komponenten 10a-h, 11a-h, 12a-h und 13a-h sind in regelmäßigen Abständen vorgesehen, so daß zumindest immer eine Antriebseinheit mit dem Frachtgut, beispielsweise einem Frachtcontainer in Kontakt steht, wobei sich die entsprechenden Abstände aufgrund der standardisierten Containergrößen ergeben. Auch die Riegeleinheiten sind entsprechend der Frachtgutgrößen anzuordnen, um je Stellplatz für einen Frachtcontainer eine ausreichende Anzahl von Riegeleinheiten vorzusehen. Es ist möglich, daß pneumatisch betriebene Komponenten 10a-h, 11a-h, 12a-h und 13a-h nur für die Antriebseinheiten vorgesehen sind und ein Verriegeln der Container mittels manuell betätigbarer Riegeleinheiten erfolgt. Es können aber sowohl Antriebseinheiten als auch Riegeleinheiten pneumatisch betätigt werden. Solche pneumatisch betriebenen Komponenten sind der Fachwelt als Pneumatikmotoren oder Pneumatikstellglieder bekannt.
Zum Zuführen der Druckluft für die pneumatisch betriebenen Komponenten 10a-h, 11a-h, 12a-h und 13a-h sind Pneumatikleitungen 5a, 5b, 5c, 5d bis 5h vorgesehen, die von einer Hauptleitung 6 abzweigen und eine Verbindung zu jeder Komponente 10a-h, 11a-h, 12a-h und 13a-h herstellen. Die Druckluft wird aus zumindest einem Pneumatik-Aggregat 7 entnommen und in die Hauptleitung 6 eingespeist. Als Pneumatik-Aggregate 7 können Kompressoren, Druckluftspeicher oder eine externe Druckluftversorgung dienen. Möglich ist es auch, daß am Flugzeug vorhandene Triebwerke die Druckluft erzeugen. Es können auch mehrere, im Frachtraum 2 verteilte Druckluftquellen bzw. Druckluftanschlüsse vorgesehen sein, um auch bei Ausfall eines Systems eine zweite Druckluftversorgung sicherzustellen.
An jeder pneumatisch betriebenen Komponente 10a-h, 11a-h, 12a-h und 13a-h sind Steuerventile angeordnet, um bei Bedarf ein Ein- und Ausschalten der entsprechenden Antriebseinheit bzw. Ent- oder Verriegeln der Riegeleinheit zu ermöglichen. Das Steuerventil einer Antriebseinheit kann beispielsweise durch einen Sensor die entsprechende Information zum Einschalten des Antriebes erhalten, wenn der Container mittels eines vorhergehenden Antriebes auf die Antriebseinheit geschoben wurde. Das Ausschalten der Antriebseinheit kann dann erfolgen, wenn der Container nicht mehr auf der Antriebsrolle der Antriebseinheit steht und somit der Sensor wieder schaltet. Falls der Container aber schon seinen Stellplatz erreicht hat, kann alternativ zum ersten Fall ein Abschalten der Antriebseinheit nach einer vorbestimmten Zeit oder aber manuell erfolgen.
Mit dem Einsatz von pneumatisch betriebenen Komponenten im Frachtraum eines Flugzeuges ist erreicht, daß keine Leistungsspannung in Höhe von 115V innerhalb des Flugzeugfrachtraumes 2 zur Verfügung gestellt werden muß und erhebliche Gefährdungen, die durch Überlastung von Geräten (Überhitzung, Funkenschlag), Feuchtigkeitsempfindlichkeit und eventueller Zerstörung von stromführenden Leitungen (Kurzschluß im System, Stromschläge) o. ä. ausgeschlossen sind. Es besteht keine Gefahr einer elektrochemischen Korrosion und auch das Entstehen von unerwünschten elekromagnetischen Magnetfeldern ist verhindert.

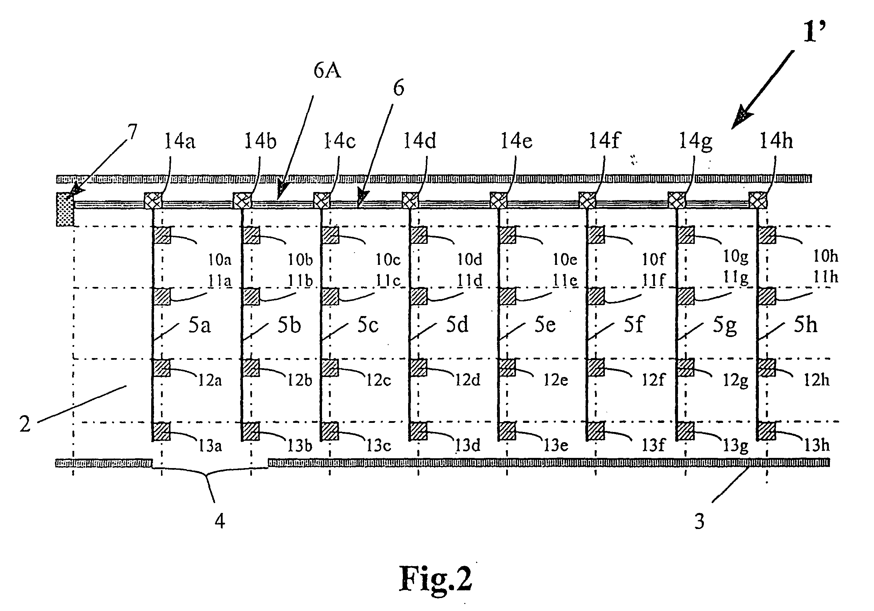

In der Fig. 2 ist eine weitere Ausführungsform 1' eines erfindungsgemäßen Frachtladesystems 1 ersichtlich. Die wesentlichen Komponenten des Frachtladesystems 1' sind wie in der ersten Ausführungsform ausgestaltet und es wird auf die Ausführungen zur Fig. 1 verwiesen.
Im Unterschied zur ersten Ausführungsform ist das Frachtladesystem 1' aber mit separaten Steuerventilen 14a bis 14h versehen, wobei jeweils für eine Reihe von Pneumatikkomponenten 10a, 11a, 12a, 13a (Reihe 1); 10b, 11b, 12b, 13b (Reihe 2) usw. das entsprechende Steuerventil 14a; 14b usw. angeordnet ist. Die Steuerventile 14a bis 14h können über Elektroniksteuerleitungen 6A, die üblicherweise mit einer Steuerspannung von 28V beaufschlagt sind, pro Stellreihe die zugeordneten pneumatisch betriebenen Komponenten 10 bis 13 steuern. Die Steuerleitung 6A wird von einer elektronischen Steuereinrichtung angesteuert, die beliebig einbaubar ist.
Ausgehend vom Pneumatik-Aggregat 7 über die Pneumatikhauptleitung 6 und Pneumatikleitungen 5a bis 5h wird den einzelnen Pneumatikkomponenten 10a-h, 11a-h, 1 2a-h und 13a-h die zur Betätigung notwendige Druckluft zur Verfügung gestellt. Da in dieser Ausführungsform Steuerventile 14a bis 14h jeweils pro Stellreihe vorgesehen sind, kann eine Betätigung der Komponenten 10a-h, 11a-h, 12a-h und 13a-h auch jeweils nur pro Stellreihe vorgenommen werden. Da in dieser Ausgestaltung Elekroniksteuerleitungen 6A mit einer Steuerspannung von 28V vorgesehen sind, ist hier ein elektropneumatisch funktionierendes Frachtladesystem realisiert. Im Gegensatz zu reinen elektrischen Systemen mit einer Leistungsspannung von 115V fließen hier nur sehr geringe Ströme und demzufolge sind die Probleme mit einer elektromagnetischen Verträglichkeit und der elektrochemischen Korrosion gering. Auch sind die Steuerleitungen 6A im Randbereich des Frachtraumes 2 verlegt, wobei diese Bereiche keine Belastungen bzw. Beschädigungen durch schwere Container ertragen müssen. Somit sind Gefährdungen durch Zerstörung bzw. Überlastung (Überhitzung) von elektrischen Geräten nicht möglich. Verschleißanfällige und gewichtbringende Elektromotoren als Antriebe für die Rollenantriebseinheiten sind hier ebenfalls unnötig.

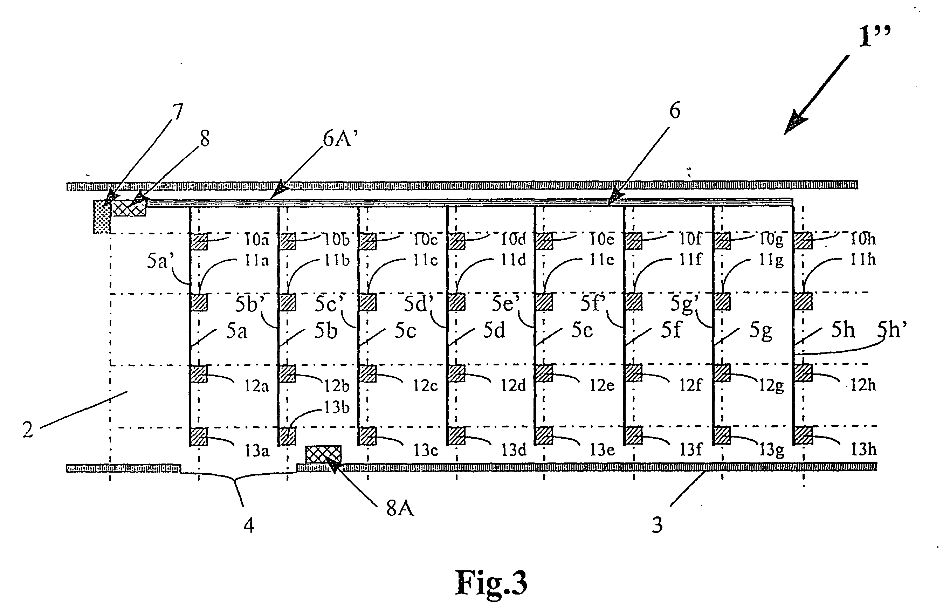

In der Fig. 3 ist eine weitere Ausführungsform 1" eines erfindungsgemäßen Frachtladesystems 1 ersichtlich. Die wesentlichen Komponenten des Frachtladesystems 1 " sind wie in der ersten Ausführungsform ausgestaltet und es wird auf die Ausführungen zur Fig. 1 verwiesen.
Im Unterschied zur ersten Ausführungsform ist das Frachtladesystem 1" aber mit einer zentralen Steuereinheit 8 versehen, wobei jeweils für die Pneumatikkomponenten 10a, 11a, 12a, 13a usw. entsprechende, vorzugsweise pneumatisch wirkende Steuerleitungen 6A' bzw. 5a' bis 5h' vorgesehen sind, die ausgehend von der Steuereineit 8 zu den Pneumatikkomponenten 10a-h, 11a-h, 1 2a-h und 13a-h führen. Die Steuereinheit 8 kann vorzugsweise in der Nähe des Pneumatik-Aggregats 7 angeordnet, um die Leitungsführung von Druckluftleitungen und Steuerleitungen einfach zu gestalten. Alternativ dazu ist auch eine Anordnung der Steuereinheit 8A in Nähe des Frachtladetores (Öffnung 4) möglich. Neben den Steuerleitungen 6A' bzw. 5a' bis 5h' sind auch die Druckluftversorgungsleitungen 6 bzw. 5a bis 5h innerhalb des Frachtraumes 2 vorzusehen, um für die Betätigung der Pneumatikkomponenten 10a-h, 11a-h, 12a-h und 13a bis h ausreichend Druckluft zur Verfügung stellen zu können. Mit dieser Ausführungsform des Frachtladesystems 1 ", die pneumatisch wirkende Steuerleitungen 6A' bzw. 5a' bis 5h' ausgehend von einer zentralen Steuereinheit 8 bzw. 8A aufweist, ist erfindungsgemäß ein rein pneumatisch arbeitendes Frachtladesystem realisiert. Im Frachtraum 2 sind keine stromführenden Leitungen vorgesehen und somit können keine der bereits genannten Gefährdungen auftreten.

In einer nicht gezeigten Ausführung ist es möglich, das Pneumatikkomponenten neben elektrisch wirkenden Komponenten in einem Frachtladesystem auch als Einzelkomponenten Anwendung finden oder nur bereichsweise, beispielsweise in besonders gefährdeten Bereichen, z.B. im Eingangsbereich mit einem hohen Bedarf an Antriebsleistung oder in Bereichen in denen die üblichen Rollenantriebseinheiten schnell verschleißen bzw. überlastet werden, eingesetzt werden. Mit einer nur teilweisen Anwendung von Pneumatikkomponenten können somit ebenfalls erhebliche Wartungsaufwendungen vermindert bzw. vorhandenes Gefährungspotential reduziert werden.

## Patentansprüche

1. Frachtladesystem für ein Flugzeug zum Be- und/oder Entladen von Beladungseinheiten, insbesondere von Containern, Paletten oder dergleichen, wobei Rollenantriebseinheiten zum Transport des Frachtgutes, Riegeleinheiten zum Verriegeln des Frachtgutes sowie Steuereinheiten zum Betätigen der Rollenantriebseinheiten und/oder der Riegeleinheiten vorgesehen sind, **dadurch gekennzeichnet, dass** mindestens die Rollenantriebseinheiten als pneumatisch angetriebene Komponenten (10a-h, 11a-h, 12a-h und 13a-h) ausgebildet sind, wobei mindestens eine Druckluftversorgung (7) über ein Leitungssystem (6, 5a- 5h) mit den Pneumatikkomponenten (10a-h, 11a-h, 12a-h und 13a-h) verbunden ist.

2. Frachtladesystem nach Anspruch 1, **dadurch gekennzeichnet, dass** pneumatisch angetriebene Riegeleinheiten als Pneumatikkomponenten (10a-h, 11a-h, 12a-h und 13a-h) vorgesehen sind.

3. Frachtladesystem nach einem der Ansprüche 1 oder 2, **dadurch gekennzeichnet, dass** die Pneumatikkomponenten (10a-h, 11a-h, 12a-h und 13a-h) mit mindestens einem am Gerät gesteuerten Steuerventil versehen sind.

4. Frachtladesystem nach Anspruch 3, **dadurch gekennzeichnet, dass** das Steuerventil mittels einem im Frachtraumboden (2) versehenen Sensor betätigbar ist.

5. Frachtladesystem nach Anspruch 1, **dadurch gekennzeichnet, dass** die Pneumatikkomponenten (10a-h, 11a-h, 12a-h und 13a-h) über Steuerventile (14a-h) betätigbar sind, die je Steflreihe (10a, 11a, 12a, 13a; 10b, 11b, 12b, 13b; ...) angeordnet sind.

6. Frachtladesystem nach Anspruch 5, **dadurch gekennzeichnet, dass** die Steuerventile (14a-h) über Elektrosteuerleitungen (6A) Steuersignale empfangen.

7. Frachtladesystem nach einem der Ansprüche 1 bis 6, **dadurch gekennzeichnet, dass** zumindest eine zentrale Steuereinheit (8, 8A) vorgesehen ist, die über Steuerleitungen (6A', 5a' bis 5h') die Pneumatikkomponenten (10a-h, 11a-h, 12a-h und 13a-h) betätigt.

8. Frachtladesystem nach Anspruch 7, **dadurch gekennzeichnet, dass** die Steuerleitungen (6A', 5a' bis 5h') pneumatisch betätigbar ausgeführt sind.

9. Frachtladesystem nach einem der Ansprüche 1 bis 8, **dadurch gekennzeichnet, dass** die Druckluftversorgung (7) mittels Kompressoren, Druckluftspeicher und/oder Anschlüssen zu externen Druckluftversorgungen realisierbar ist.

10. Frachtladesystem nach einem der Ansprüche 1 bis 9, **dadurch gekennzeichnet, dass** die Druckluftversorgung (7) zumindest zeitweise mittels Triebwerkszapfluft realisierbar ist.

## Claims

1. Cargo loading system for an aircraft for loading and/or unloading unit loads, in particular containers, pallets or the like, wherein roller driving units for transporting the cargo, locking units for locking the cargo and control units for actuating the roller driving units and/or locking units are provided, **characterized in that** at least the roller driving units are designed as pneumatically operated components (10a-h, 11a-h, 12a-h and 13a-h), wherein at least one compressed-air supply (7) is connected by a line system (6, 5a-5h) to the pneumatic components (10a-h, 11a-h, 12a-h and 13a-h).

2. Cargo loading system according to claim 1, **characterized in that** pneumatically operated locking units are provided as pneumatic components (10a-h, 11a-h, 12a-h and 13a-h).

3. Cargo loading system according to one of claims 1 or 2, **characterized in that** the pneumatic components (10a-h, 11a-h, 12a-h and 13a-h) are provided with at least one control valve controlled at the appliance.

4. Cargo loading system according to claim 3, **characterized in that** the control valve is actuable by means of a sensor provided in the cargo hold floor (2).

5. Cargo loading system according to claim 1, **characterized in that** the pneumatic components (10a-h, 11a-h, 12a-h and 13a-h) are actuable via control valves (14a-h), which are disposed per positioning row (10a, 11a, 12a, 13a; 10b, 11b, 12b, 13b; ...).

6. Cargo loading system according to claim 5, **characterized in that** the control valves (14a-h) receive control signals via electric control lines (6A).

7. Cargo loading system according to one of claims 1 to 6, **characterized in that** at least one central control unit (8, 8A) is provided, which via control lines (6A', 5a' to 5h') actuates the pneumatic components (10a-h, 11a-h, 12a-h and 13a-h).

8. Cargo loading system according to claim 7, **characterized in that** the control lines (6A', 5a' to 5h') are designed so as to be pneumatically actuable.

9. Cargo loading system according to one of claims 1 to 8, **characterized in that** the compressed-air supply (7) may be realized by means of compressors, compressed-air accumulators and/or connections to external compressed-air supplies.

10. Cargo loading system according to one of claims 1 to 9, **characterized in that** the compressed-air supply (7) may be realized at least temporarily by means of engine tapped air.

## Revendications

1. Système de chargement de fret pour avion destiné au chargement et / ou déchargement d'unités de charge, et plus particulièrement de conteneurs, palettes ou analogues, des unités d'entraînement à roulettes, des unités à verrou et des unités de commande ayant été prévues respectivement pour transporter le fret, verrouiller le fret et actionner les unités d'entraînement à roulettes et/ou les unités à verrou, et **caractérisé en ce que** au moins les unités d'entraînement à roulettes ont été conçues sous la forme de composants à entraînement pneumatique (10ah, 11a-h, 12a-h et 13a-h), au moins une alimentation d'air comprimé (7) ayant été raccordée aux composants pneumatiques (10a-h, 11a-h, 12a-h et 13ah) par l'intermédiaire d'un système de canalisations (6, 5a-5h).

2. Système de chargement de fret selon la revendication 1, **caractérisé en ce que** des unités à verrou à entraînement pneumatique ont été prévues comme composants pneumatiques (10a-h, 11a-h, 12a-h et 13ah).

3. Système de chargement de fret selon une des revendications 1 ou 2, **caractérisé en ce que** les composantes pneumatiques (10a-h, 11a-h, 12a-h et 13a-h) ont été dotées d'au moins une soupape de commande.

4. Système de chargement de fret selon la revendication 3, **caractérisé en ce que** la soupape de commande peut être actionnée à l'aide d'un capteur prévu dans le fond de la soute (2).

5. Système de chargement de fret selon la revendication 1, **caractérisé en ce que** les composants pneumatiques (10a-h, 11a-h, 12a-h et 13a-h) peuvent être actionnés par l'intermédiaire de soupapes de commande (14a-h) disposées par rangées (10a, 11a, 12a, 13a ; 10b, 11b, 12b, 13b ; ...).

6. Système de chargement de fret selon la revendication 5, **caractérisé en ce que** les soupapes de commande (14a-h) reçoivent des signaux de commande par l'intermédiaire de lignes pilotes électriques (6A).

7. Système de chargement de fret selon une des revendications 1 à 6, **caractérisé en ce que** au moins une unité de commande centrale (8, 8A) a été prévue, laquelle unité actionne les composants pneumatiques (10a-h, 11a-h, 12a-h et 13a-h) par l'intermédiaire de lignes pilotes (6A', 5a' à 5h').

8. Système de chargement de fret selon la revendication 7, **caractérisé en ce que** les lignes pilotes (6A', 5a' à 5h') ont été conçues de manière à pouvoir être actionnées de façon pneumatique.

9. Système de chargement de fret selon une des revendications 1 à 8, **caractérisé en ce que** l'alimentation en air comprimé (7) peut être réalisée à l'aide de compresseurs, d'accumulateurs à charge d'air comprimé et/ou de raccordements à des alimentations en air comprimé externes.

10. Système de chargement de fret selon une des revendications 1 à 9, **caractérisé en ce que** l'alimentation en air comprimé (7) peut être réalisée au moins partiellement à l'aide d'air puisé du réacteur.
